# EUROPÄISCHE PATENTSCHRIFT

(11) **EP 1 064 709 B1**
(45) Veröffentlichungstag und Bekanntmachung des Hinweises auf die Patenterteilung: **10.07.2002**
(21) Anmeldenummer: 99915602.9
(22) Anmeldetag: 13.03.1999
(51) Int. Cl.: H02G 3/10

(54) **WANDBEFESTIGTES INSTALLATIONSGEHÄUSE**
WALL-MOUNTED INSTALLATION HOUSING
BOITIER D'INSTALLATION A FIXATION MURALE

(30) Priorität: 18.03.1998 DE 19811711
(43) Veröffentlichungstag der Anmeldung: 03.01.2001
(73) Patentinhaber: Rittal-Werk Rudolf Loh GmbH & Co. KG, 35745 Herborn (DE)
(72) Erfinder: THIELMANN, Bodo, D-35745 Herborn (DE); HARTEL, Marc, D-35447 Reiskirchen (DE); BESSERER, Horst, D-35745 Herborn (DE)
(74) Vertreter: Fleck, Hermann-Josef, Dr.-Ing.
(86) Internationale Anmeldenummer: EP9901664
(87) Internationale Veröffentlichungsnummer: WO9948181

(56) Entgegenhaltungen:
- DE-C- 4 410 795
- FR-A- 2 628 577
- FR-A- 2 737 055

## Beschreibung

Die Erfindung betrifft ein Wandbefestigtes Installationsgehäuse für den Einbau elektrischer Komponenten mit einem Basisteil, das mit einem Boden an die Wand anschraubbar ist, wobei auf oder über das Basisteil eine haubenartige Abdeckung setzbar ist, die mit zwei Seitenwänden, einer Bodenwand und einer Deckwand einen Installationsraum umgibt.

Ein solches Installationsgehäuse ist aus der DE 44 10 795 C1 bekannt. Hierbei ist als Basisteil ein Blech-Biegeteil verwendet, das ein parallel zur Wand ausgerichtetes Bodenteil aufweist. Das Bodenteil ist mit mehreren Befestigungsaufnahmen versehen, an denen elektrische Einbauten festgelegt und miteinander verdrahtet werden können. Nach der Installation dieser Einbauten läßt sich das Installationsgehäuse mit der Abdeckung verschließen. Die haubenartige Abdeckung wird hierzu über das Basisteil gesetzt und an diesem fixiert.

Es ist Aufgabe der Erfindung, ein wandmontierbares Installationsgehäuse der eingangs erwähnten Art zu schaffen, bei dem der verfügbare Installationsraum mit Einbauten gut ausgenutzt werden kann.

Diese Aufgabe wird dadurch gelöst, daß an dem Basisteil eine oder mehrere Stützen befestigbar sind, die in Richtung auf die Abdeckung von dem Boden des Basisteils vorstehen und die die Abdeckung gegenüber dem Basisteil abstützen, und daß die Stützen einen Montageabschnitt aufweisen, der mit Befestigungsaufnahmen versehen ist, an denen dem Installationsraum zugekehrt Einbauten befestigbar sind.

An den Stützen können Einbauten beabstandet zu dem Boden des Basisteils fixiert werden. Hierdurch läßt sich der verfügbare Installationsraum auch in Richtung der Tiefe des Installationsgehäuses mit Einbauten bestücken. Hierdurch läßt sich zum einen eine variable Bestückung des Installationsgehäuse-Innenraumes erreichen. Zum anderen ist auch eine übersichtliche Verdrahtung möglich.

Nach einer bevorzugten Ausgstaltungsvariante der Erfindung ist es vorgesehen, daß das Bodenteil wenigstens eine seitliche Abkantung aufweist, die mit einer Aussparung versehen ist und in die eine Bürstenleiste eingesetzt ist, und daß die Bürstenleiste zusammen mit dem, dem Basisteil zugekehrten Randbereich der Abdeckung eine wandnahe Kabeleinführung bildet.

Bei einem erfindungsgemäßen Installationsgehäuse können beispielsweise die Stützen an zwei gegenüberliegenden Seiten des Basisteils befestigt sein und mit dem Montageabschnitt von diesem vorstehen. An den beiden Stützen lassen sich dann beispielsweise Montageschienen befestigen, die sich quer über die gesamte Breite des Installationsraumes erstrecken. Denkbar ist es insbesondere auch, daß an den Montageabschnitten der Stützen mittelbar oder unmittelbar größere Einbauten befestigt werden, die sich über die gesamte Breite des Installationsraumes erstrecken. Zur geordneten Kabelführung in dem Installationsgehäuse kann es vorgesehen sein, daß der Montageabschnitt der Stützen als Wand ausgebildet ist, die parallel und im Abstand zu der zugeordneten Seitenwand steht, und daß der Montageabschnitt mit wenigstens einer Kabeldurchführung versehen ist, die eine räumliche Verbindung zwischen dem Installationsraum und dem, zwischen dem Montageabschnitt und der Seitenwand gebildeten Kabelschacht bildet.

Wenn im Installationsraum genormte Baugruppenträger eingebaut werden sollen, so kann es bevorzugterweise vorgesehen sein, daß die zwei, den einander gegenüberliegenden Seiten des Basisteils zugeordneten Stützen Baugruppenträger aufweisen, die mit Reihen von in Teilungsraster angeordneten Befestigungsaufnahmen versehen sind, und daß die Baugruppenträger zueinander wahlweise in zwei Abständen positionierbar sind, wobei in der einen Montageposition Baugruppen mit metrischen und in der zweiten Montageposition Baugruppen mit zöllischen Einbaumaß an den beiden Baugruppenträgern befestigbar sind.

Zur sicheren Festlegung der Abdeckung an dem Basisteil sieht eine Erfindungsausgestaltung vor, daß die Stützen einen als horizontale Abkantung ausgebildeten Stützfuß aufweisen, der auf dem Boden des Basisteils aufliegt und an diesen lösbar befestigt ist, daß sich an den Stützfuß der Montageabschnitt rechtwinklig anschließt, daß der Montageabschnitt an seinem, dem Stützfuß abgekehrten Ende seitlich abgewinkelte Stützabschnitte aufweist, die in Richtung auf die Abdeckung vorstehen und an der Innenwandung der Seitenwand der Abdeckung anliegen um diese parallel zu der Wand abzustützen und daß die Stütze mit ihrer dem Basisteil abgekehrten Stirnseite die Abdeckung in Richtung senkrecht zu der Wand abstützt. Die Stützabschnitte ermöglichen eine Abstützung der Abdeckung in Richtung parallel zur Wand.

Um einen einfachen und stabilen Aufbau der Abdeckung zu erreichen, ist ein erfindungsgemäßes Installationsgehäuse derart ausgestaltet, daß die Seitenwände der Abdeckung mit horizontalen Befestigungsflanschen versehen sind, daß die Bodenwand und die Deckwand ebenfalls mit horizontalen Befestigungsflanschen versehen sind, die an den Befestigungsflanschen der Seitenwände anliegen, und daß die Befestigungsflansche zum Innenraum des Gehäusekorpusses gerichtet und hier miteinander verschraubt sind.

Damit die Abdeckung einfach und ohne Werkzeug an dem Basisteil festgelegt werden kann, kann sie mit einem Schloß versehen sein, das mit einem Schließelement des Basisteiles oder der Stütze zur Fixierung der Abdeckung zusammenarbeitet. Die Abdeckung kann an ihrer dem Basisteil abgekehrten Frontseite mit einer Tür verschließbar sein, die im Bereich einer Seite der Abdeckung anscharniert ist. Über die Tür kann der Installationsraum bei montierter Abdeckung zugänglich gemacht werden. Insbesondere kann die Türe auch mit einem Sichtfenster ausgestattet sein, durch das hindurch sich Anzeigelemente zur Überwachung des Betriebszustandes ablesen lassen können.

Die Erfindung wird im folgenden anhand eines in den Zeichnungen dargestellten Ausführungsbeispieles näher erläutert. Es zeigen:
- Fig. 1: in perspektivischer Seitenansicht ein Basisteil mit zwei daran montierten Stützen,
- Fig. 2: ein Installationsgehäuse mit dem Basisteil gemäß Fig. 1 in Explosionsdarstellung,
- Fig. 3: eine Abdeckung für das Installlationsgehäuse gemäßfig. 2 in perspektivischer Explosionsdarstellung.

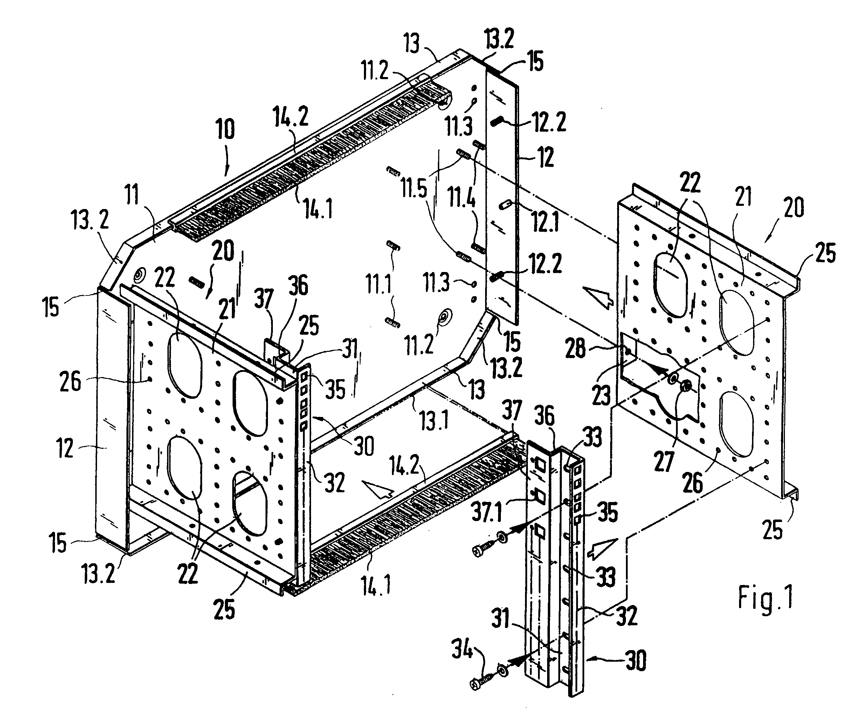

In der Fig. 1 ist ein Basisteil 10 dargestellt, daß an eine vertikale Wand montiert werden kann. Das Basisteil 10 weist einen vertikalen Boden 11 auf, an den rechtwinklig Abkantungen 12,13 angeschlossen sind. An den horizontal verlaufenden Abkantungen 13 sind Bürstenleisten 14.1 befestigt. Die Bürstenleisten 14.1 sind mit Profilleisten 14.2 versehen, die einen in Profillängsrichtung verlaufenden Schlitz aufweisen. Mit diesem Schlitz können die Profilleisten 14.2 auf den Rand 13.1 der Abkantung 13 aufgesteckt werden. In dem den Abkantungen 12 zugekehrten Übergangsbereichen weisen die Abkantungen 13 Schrägungen 13.2 auf. Zwischen den Schrägungen 13.2 und den Abkantungen 12 verläuft ein Schlitz 15 in Richtung senkrecht zu dem Boden 11. Wie die in Fig. 1 rechts dargestellte Abkantung 12 erkennen läßt, sind dem Installationsraum zugekehrte Halterungen 12.2, vorliegend Gewindebolzen auf der Abkantung 12 fixiert. An diesen lassen sich Montageschienen befestigen. Zwischen den beiden Halterungen 12.2 trägt die Abkantung mittig ein Schließelement 12.1.

Zur Fixierung des Basisteiles 10 an der Wand sind in den Boden 11 Befestigungsaufnahmen 11.2, 11.3 eingearbeitet. Durch diese können Befestigungsschrauben eingeführt und in die Wand eingeschraubt werden. Um Montageplatten parallel zu dem Boden 11 an dem Basisteil 10 fixieren zu können, sind Gewindebolzen 11.1 vorgesehen, die sich rechtzwinklig zu der Ebene des Bodens 11 erstrecken. Im Bereich der seitlichen Abkantungen 12 sind jeweils vier weitere Gewindebolzen 11.4,11.5 auf dem Boden 11 befestigt. Diese Gewindebolzen 11.4,11.5 dienen zur Befestigung von Stützen 20. Die Stützen 20 sind als Stanz-Biegeteil aus einem Blechzuschnitt gefertigt. Sie weisen einen parallel zum Boden 11 verlaufenden Stützfuß 23 auf, der als Abkantung von einem Montageabschnitt 21 abgewinkelt ist. Der Montageabschnitt 21 ist als ebene Wand ausgebildet, die mit mehreren Reihen von Befestigungsaufnahmen 26 versehen ist. An die horizontalen Ränder des Montageabschnittes 21 schließen sich Stützabschnitte 25 an, die von dem Montageabschnitt 21 einstückig abgekantet sind. Die Stützabschnitte 25 erstrecken sich dabei vom Boden 11 bis zum freien Ende des Montageabschnittes 21.

Der Stützfuß 23 einer Stütze 20 ist mit zwei Bohrungen 28 versehen. Mit diesen Bohrungen 28 kann die Stütze 20 auf die Gewindebolzen 11.4, 11.5 aufgesteckt werden. Wie die Fig. 1 erkennen läßt, läßt sich die Stütze 20 dabei wahlweise an einem der beiden Paare von Gewindebolzen 11.4 oder 11.5 fixieren. Dementsprechend weist auch der Montageabschnitt 21 in den unterschiedlichen Montagepositionen einen unterschiedlichen Abstand zu der Abkantung 12 auf. Wenn die beiden Stützen 20 nahe den Abkantungen 12 befestigt werden, so werden auch die beiden Montageabschnitte 21 der Stützen 20 weit voneinander beabstandet. Bei diesem weiten Abstand können Baugruppen mit metrischem Baumaß an Baugruppenträgern 30 befestigt werden. Die Baugruppenträger 30 sind als Profilabschnitte ausgebildet, die zwei zueinander rechtwinklig stehenden Schenkel 31,32 aufweisen. Der Schenkel 31 liegt dabei flächig auf dem Montageabschnitt 21 auf. In den Schenkel 31 sind Langlöcher 33 angebracht, die fluchtend zu den Befestigungsaufnahmen 26 des Montageabschnittes 21 angeordnet werden können. Zur Fixierung des Baugruppenträgers 30 werden Befestigungsschrauben 34 in die Langlöcher 33 eingesetzt und in die Befestigungsaufnahmen 26 eingeschraubt. Der Baugruppenträger 30 kann dabei in verschiedenen Positionen, entsprechend der Teilung des Rasters von Befestigungsaufnahmen 26 variabel in der Tiefe des Installationsgehäuses festgelegt werden.

Der Baugruppenträger 30 kann auch noch stufenlos in Richtung der Tiefe des Installationsgehäuses mittels der Langlöcher 33 verstellt werden.

Der Schenkel 32, der rechtwinklig zu dem Montageabschnitt 21 angeordnet ist, trägt ebenfalls eine Reihe von Befestigungsaufnahmen 35, die als quadratische Durchbrüche aus dem Schenkel 32 ausgestanzt sind. An den Befestigungsaufnahmen 35 lassen sich die Baugruppen festmachen. Wenn anstelle von Baugruppen mit metrischem Baumaß Baugruppen mit zöllischem Baumaß eingebaut werden sollen, so müssen die Stützen 20 versetzt werden. Hierzu wird der Stützfuß 23 mit dem Gewindebolzen 11.5 verschraubt. Dementsprechend weisen die Stützen 20 nun einen kleinen Abstand zueinander auf. Dieser Abstand entspricht dann dem zöllischen Baumaß der Baugruppen.

An den Schenkel 31 schließt sich über einen Steg 36 ein Befestigungsansatz 37 an. Der Befestigungsansatz 37 trägt Befestigungsaufnahmen 37.1 zur Fixierung von Anbauelementen.

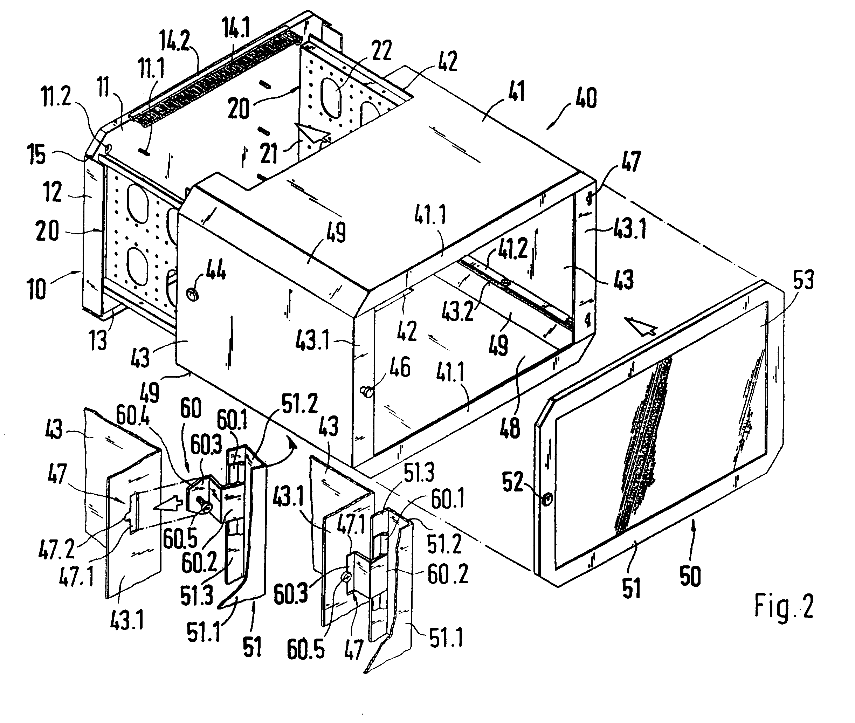

Wie Fig. 2 erkennen läßt, kann auf das Basisteil 10 eine Abdeckung 40 aufgesetzt werden. Die Abdeckung 40 ist haubenartig ausgebildet und weist zwei Seitenwände 43, eine Bodenwand 41 und eine Deckwand 48 auf. Die Seitenwände 43 und die Boden- bzw. Deckwand 41 und 48 schließen frontseitig mit abgewinkelten Rändern 43.1, 41.1 ab. An dem vertikal verlaufenden Rand 43.1 der linken Seitenwand 43 kann eine Tür 50 anscharniert werden. Die Tür 50 weist einen Türrahmen 51 auf in den ein Fenster 53 eingeklebt ist. Zur Fixierung der Tür 50 sind Scharnierhalterungen 47 verwendet.

In der Fig. 2 ist anhand von zwei Details die Scharnierausgestaltung näher gezeigt. Aus diesen Darstellungen läßt sich die Scharnierhalterung 47 als Schlitz 47.1 erkennen. Der Schlitz 47.1 ist mittig mittels einer Schraubaufnahme 47.2 erweitert. Das Scharnier ist mit seinem ersten Scharnierteil 60.1 an dem Türrahmen 51 befestigt. Der Türrahmen 51 weist in Querschnitt zwei zueinander parllel stehende Schenkel 51.1, 51.3 auf, die miteinander über einen Verbindungsabschnitt 51.2 verbunden sind. Das Scharnierteil 60.1 ist auf dem Schenkel 51.3 festgeschweißt. Das zweite Scharnierteil 60 ist über einen Scharnierstift mit dem ersten Scharnierteil 60.1 verbunden. Im Anschluß an den Scharnierstift weist das zweite Scharnierteil 60 ein Distanzstück 60.2 auf. Das Distanzstück 60.2 ist an dem Schenkel 51.3 vorbeigeführt. Im Anschluß an das Distanzstück 60.2 besitzt das zweite Scharnierteil 60 eine rechtwinklige Abkantung, die einen Befestigungsabschnitt 60.3 übergeht. Der Befestigungsabschnitt 60.3 verläuft parallel zu dem Distanzstück 60.2.

An den beiden horizontal verlaufenden Seiten ist der Befestigungsabschnitt 60.3 mit Einführschrägen 60.4 versehen. Diese Einführschrägen 60.4 erleichtern das Einfädeln des Befestigungsabschnittes 60.3 in den Schlitz 47.1. Wenn der Befestigungsabschnitt 60.3 in den Schlitz 47.1 eingeschoben ist, liegt er rückseitig an dem Rand 43.1 an. In eine Schraubaufnahme des Befestigungsabschnittes 60.3 ist eine Schraube 60.5 eingesetzt. Diese Schraube 60.5 schlägt an der Schraubaufnahme 47.2 an. Zur Fixierung des Scharnieres wird die Schraube 60.5 in Richtung auf den Rand 43.1 verstellt, bis sich ihr Schraubenkopf mit diesem verspannt.

Die aus Abdeckung 40 und Tür 50 bestehende Einheit kann über die Stützen 20 hinweg auf das Basisteil 10 aufgeschoben werden. Dabei übergreifen die Seitenwände 43 die Abkantungen 12. Bei aufgeschobener Abdeckung 40 sind die Bodenwand und die Deckwand 48 mittels Abwinklungen 49 durch die Schlitze 15 hindurchgeführt. Damit liegt die Bodenwand 41 bzw. die Deckwand 48 an den Innenseiten der Ränder 13 an. Zur Fixierung der Abdeckung 40 sind an den beiden Seitenwänden 43 Schlösser 44 vorgesehen. Diese Schlösser 44 weisen Hakenelemente auf, die hinter die Schließelemente 12.1 (siehe Fig. 1) gedreht werden können. Die aufgesetzte Abdeckung 40 liegt innenseitig an den Stützabschnitten 25 der Stützen 20 an. Die Stützabschnitte 25 hinterfassen die Abdeckung im Bereich der Abwinklungen der Bodenwand 49 bzw. Deckwand 48. Dadurch, daß sich die Stützabschnitte 25 über die gesamte Tiefe des Montageabschnittes 21 erstrecken, kann die Abdeckung 40 einfach und verkantungsfrei aufgeschoben werden.

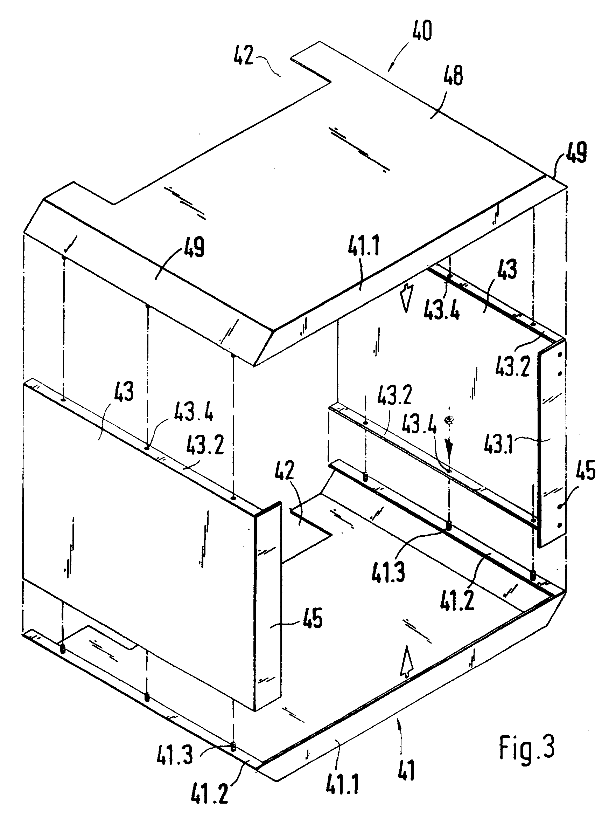

In der Fig. 3 ist eine Abdeckung 40 dargestellt, die im wesentlichen die Abdeckung 40 in Fig. 2 entspricht. Im Gegensatz zu der Abdeckung gemäß Fig. 2 weist diese Abdeckung keine schlitzförmigen Scharnierhalterungen 47 auf. Stattdessen sind Bohrungen 45 für die Scharniere vorgesehen. Wie der Fig. 3 entnommen werden kann, weisen die Seitenwände 43 horizontale Befestigungsflansche 43.2 auf, die mit Bohrungen 43.4 versehen sind. Frontseitig ist von der Seitenwand der Rand 43.1 abgekantet. Die Bodenwand 41 und die Deckwand 48 weisen ebenfalls horizontale Befestigungsflansche 41.2 auf. Auf diese Befestigungsflansche sind Stehbolzen 41.3 aufgesetzt. Frontseitig ist die Bodenwand 41 bzw. die Deckwand 48 mit dem Rand 41.1 abgeschlossen. Die Bodenwand 41 und die Deckwand 48 sind identisch ausgebildet. Ebenso sind die beiden Seitenwand 43 identisch ausgebildet.

Zur Montage der Abdeckung werden die Seitenwände 43 mit ihren Befestigungsflanschen 43.2 auf die Befestigungsflansche 41.2 der Boden- und der Deckwand 41 bzw. 48 aufgesetzt. Dabei treten die Stehbolzen 41.3 durch die Bohrungen 43.4 hindurch. Zur Fixierung werden Muttern auf die Stehbolzen 41.3 aufgeschraubt.

## Patentansprüche

1. Wandbefestigtes Installationsgehäuse für den Einbau elektrischer Komponenten mit einem Basisteil (10), das mit einem Boden (11) an die Wand anschraubbar ist, wobei auf oder über das Basisteil (10) eine haubenartige Abdeckung (40) setzbar ist, die mit zwei Seitenwänden (43), einer Bodenwand (41) und einer Deckwand (48) einen Installationsraum umgibt,
**dadurch gekennzeichnet,**
**daß** an dem Basisteil (10) eine oder mehrere Stützen (20) befestigbar sind, die in Richtung auf die Abdeckung (40) von dem Boden (11) des Basisteils (10) vorstehen und die die Abdeckung (40) gegenüber dem Basisteil abstützen, und
**daß** die Stützen (20) einen Montageabschnitt (21) aufweisen, der mit Befestigungsaufnahmen (26) versehen ist, an denen dem Installationsraum zugekehrt Einbauten befestigbar sind.

2. Installationsgehäuse nach Anspruch 1,
**dadurch gekennzeichnet,**
**daß** das Bodenteil (10) wenigstens eine seitliche Abkantung (12,13) aufweist, die mit einer Aussparung (13.1) versehen ist und in die eine Bürstenleiste (14.1) eingesetzt ist, und
**daß** die Bürstenleiste (14.1) zusammen mit dem, dem Basisteil (10) zugekehrten Randbereich der Abdeckung (40) eine wandnahe Kabeleinführung bildet.

3. Installationsgehäuse nach Anspruch 1 oder 2,
**dadurch gekennzeichnet,**
**daß** die Stützen (20) an zwei gegenüberliegenden Seiten des Basisteils (10) auf den Boden (11) befestigt sind und rechtwinklig mit dem Montageabschnitt (21) von diesem vorstehen.

4. Installationsgehäuse nach einem der Ansprüche 1 bis 3,
**dadurch gekennzeichnet,**
**daß** der Montageabschnitt (21) der Stützen (20) als Wand ausgebildet ist, die parallel und im Abstand zu der zugeordneten Seitenwand (43) steht, und
**daß** der Montageabschnitt (21) mit wenigstens einer Kabeldurchführung (22) versehen ist, die eine räumliche Verbindung zwischen dem Installationsraum und dem, zwischen dem Montageabschnitt (21) und der Seitenwand (43) gebildeten Kabelschacht bildet.

5. Installationsgehäuse nach einem der Ansprüche 1 bis 4,
**dadurch gekennzeichnet,**
**daß** die zwei, den einander gegenüberliegenden Seiten des Basisteils (10) zugeordneten Stützen (20) Baugruppenträger (30) aufweisen, die mit Reihen von in Teilungsraster angeordneten Befestigungsaufnahmen (35) versehen sind, und
**daß** die Baugruppenträger (30) zueinander wahlweise in zwei Abständen positionierbar sind, wobei in der einen Montageposition Baugruppen mit metrischen und in der zweiten Montageposition Baugruppen mit zöllischen Einbaumaß an den beiden Baugruppenträgern (30) befestigbar sind.

6. Installationsgehäuse nach einem der Ansprüche 1 bis 5,
**dadurch gekennzeichnet,**
**daß** die Stützen (20) einen als horizontale Abkantung ausgebildeten Stützfuß (23) aufweisen, der auf dem Boden (11) des Basisteils (10) aufliegt und an diesem lösbar befestigt ist,
**daß** sich an den Stützfuß (23) der Montageabschnitt (21) rechtwinklig anschließt,
**daß** der Montageabschnitt (21) an seinem, dem Stützfuß abgekehrten Ende seitlich abgewinkelte Stützabschnitte (25) aufweist, die in Richtung auf die Abdeckung (40) vorstehen und an der Innenwandung der Seitenwand der Abdeckung (40) anliegen um diese parallel zu der Wand abzustützen und
**daß** die Stütze (20) mit ihrer dem Basisteil (10) abgekehrten Stirnseite die Abdeckung in Richtung senkrecht zu der Wand abstützt.

7. Installationsgehäuse nach einem der Ansprüche 1 bis 6,
**dadurch gekennzeichnet,**
**daß** die Seitenwände (43) der Abdeckung (40) mit horizontalen Befestigungsflanschen (43.2) versehen sind,
**daß** die Bodenwand (41) und die Deckwand (48) ebenfalls mit horizontalen Befestigungsflanschen (41.2) versehen sind, die an den Befestigungsflanschen (43.2) der Seitenwände (43) anliegen, und
**daß** die Befestigungsflansche (41.2, 43.2) zum Innenraum des Gehäusekorpusses gerichtet und hier miteinander verschraubt sind.

8. Installationsgehäuse nach einem der Ansprüche 1 bis 7,
**dadurch gekennzeichnet,**
**daß** die Abdeckung (40) wenigstens ein Schloß (44) besitzt, das mit einem Schließelement (12.1) des Basisteils (10) oder der Stütze (20) zur Fixierung der Abdeckung (40) an dem Basisteil (10) zusammenarbeitet.

9. Installationsgehäuse nach einem der Ansprüche 1 bis 8,
**dadurch gekennzeichnet,**
**daß** die dem Basisteil (10) abgekehrte Frontseite der Abdeckung mit einer Türe (50) verschließbar ist, die im Bereich einer Seite der Abdeckung (40) anscharniert ist.

## Claims

1. Wall-mounted installation housing for the installation of electrical components, having a base part (10) which can be screwed onto the wall by way of a base (11), it being possible to position on or over the base part (10) a hood-like covering (40) which encloses an installation space by way of two side walls (43), a base wall (41) and a cover wall (48), **characterized in that** one or more supports (20) can be fastened on the base part (10), said supports projecting in the direction of the covering (40) from the base (11) of the base part (10) and supporting the covering (40) in relation to the base part, and **in that** the supports (20) have an installation section (21) which is provided with fastening mounts (26) on which internal fittings can be fastened such that they are directed towards the installation space.

2. Installation housing according to Claim 1, **characterized in that** the base part (10) has at least one lateral angled portion (12, 13) which is provided with a recess (13.1) and into which a brush strip (14.1) is inserted, and **in that** the brush strip (14.1), together with that border region of the covering (40) which is directed towards the base part (10), forms a cable lead-in in the vicinity of the wall.

3. Installation housing according to Claim 1 or 2, **characterized in that** the supports (20) are fastened on the base (11) on two opposite sides of the base part (10) and project therefrom at right angles by way of the installation section (21).

4. Installation housing according to one of Claims 1 to 3, **characterized in that** the installation section (21) of the supports (20) is designed as a wall which is located parallel to, and at a distance from, the associated side wall (43), and **in that** the installation section (21) is provided with at least one cable lead-through (22), which forms a spatial connection between the installation space and the cable shaft formed between the installation section (21) and the side wall (43).

5. Installation housing according to one of Claims 1 to 4, **characterized in that** the two supports (20), assigned to mutually opposite sides of the base part (10), have subassembly carriers (30) which are provided with rows of fastening mounts (35) arranged at unit spacings, and **in that** the subassembly carriers (30) can be spaced apart from one another optionally by two distances, it being possible to fasten on the two subassembly carriers (30), in one installation position, subassemblies with metric installation dimensions and, in the second installation position, subassemblies with imperial installation dimensions.

6. Installation housing according to one of Claims 1 to 5, **characterized in that** the supports (20) have a supporting foot (23) which is designed as a horizontal angled portion, rests on the base (11) of the base part (10) and is fastened releasably thereon, **in that** the supporting foot (23) is adjoined at right angles by the installation section (21), **in that**, at its end which is directed away from the supporting foot, the installation section (21) has angled supporting sections (25) which project in the direction of the covering (40) and butt against the inner wall of the side wall of the covering (40) in order to support the latter parallel to the wall, and **in that** the support (20) supports the covering in the direction perpendicular to the wall by way of its end side which is directed away from the base part (10).

7. Installation housing according to one of Claims 1 to 6, **characterized in that** the side walls (43) of the covering (40) are provided with horizontal fastening flanges (43.2), **in that** the base wall (41) and the cover wall (48) are likewise provided with horizontal fastening flanges (41.2), which butt against the fastening flanges (43.2) of the side walls (43), and **in that** the fastening flanges (41.2, 43.2) are directed towards the interior of the housing body and are screwed to one another here.

8. Installation housing according to one of Claims 1 to 7, **characterized in that** the covering (40) has at least one lock (44) which interacts with a locking element (12.1) of the base part (10) or of the support (20) in order to fix the covering (40) on the base part (10).

9. Installation housing according to one of Claims 1 to 8, **characterized in that** the front side of the covering, which is directed away from the base part (10), can be closed by a door (50) which is hinged on in the region of one side of the covering (40).

## Revendications

1. Boîtier d'installation à fixation murale pour le montage de composants électriques, avec une pièce de base (10), qui peut être fixée au mur avec des vis par un fond (11), dans lequel un couvercle (40) en forme de capot peut être posé sur ou au-dessus de la pièce de base (10), lequel entoure un espace d'installation avec deux parois latérales (43), une paroi de fond (41) et une paroi de plafond (48), **caractérisé en ce que** sur la pièce de base (10) peuvent être fixés un ou plusieurs supports (20), qui sont saillants en direction du couvercle (40) à partir du fond (11) et supportent le couvercle (40) par rapport à la pièce de base (10), et **en ce que** les supports (20) présentent une portion de montage (21), qui est pourvue de trous de fixation (26), auxquels des composants tournés vers l'espace d'installation peuvent être fixés.

2. Boîtier d'installation suivant la revendication 1, **caractérisé en ce que** la pièce de fond (10) présente au moins un bord latéral plié (12, 13), qui est pourvu d'un évidement (13.1) et dans lequel est insérée une ligne de brosse (14.1), et **en ce que** la ligne de brosse (14.1) forme, avec la région du bord du couvercle (40) tournée vers la pièce de base (10), une entrée de câble proche du mur.

3. Boîtier d'installation suivant la revendication 1 ou 2, **caractérisé en ce que** les supports (20) sont fixés au fond (11) sur deux côtés opposés de la pièce de base (10) et sont en saillie perpendiculaire sur celui-ci par la portion de montage (21).

4. Boîtier d'installation suivant l'une quelconque des revendications 1 à 3, **caractérisé en ce que** la portion de montage (21) des supports (20) a la forme d'une paroi, qui est parallèle à et est distante de la paroi latérale associée (43), et **en ce que** la portion de montage (21) est pourvue d'au moins un passage de câble (22), qui forme une communication spatiale entre l'espace d'installation et le puits à câbles formé entre la portion de montage (21) et la paroi latérale (43).

5. Boîtier d'installation suivant l'une quelconque des revendications 1 à 4, **caractérisé en ce que** les deux supports (20) associés aux côtés de la pièce de base (10) opposés l'un à l'autre présentent des supports de blocs (30), qui sont pourvus de rangées de trous de fixation (35) disposés en réseau modulaire, et **en ce que** les supports de blocs (30) peuvent être positionnés au choix à deux distances les uns des autres, des blocs pouvant être fixés sur les deux supports de blocs (30) dans une première position de montage avec une cote de montage métrique et dans la seconde position de montage avec une cote de montage anglaise.

6. Boîtier d'installation suivant l'une quelconque des revendications 1 à 5, **caractérisé en ce que** les supports (20) présentent un pied de support (23) ayant la forme d'un bord horizontal plié (23), qui s'applique sur le fond (11) de la pièce de base (10) et est fixé à celui-ci de façon démontable, **en ce que** la portion de montage (21) se raccorde perpendiculairement au pied de support (23), **en ce que** la portion de montage (21) présente, sur son extrémité éloignée du pied de support, des portions de support (25) coudées latéralement, qui sont saillantes en direction du couvercle (40) et s'appliquent sur la face intérieure de la paroi latérale du couvercle (40) afin de soutenir celle-ci parallèlement à la paroi, et **en ce que** le support (20) soutient le couvercle en direction perpendiculaire à la paroi avec sa face d'extrémité située à l'opposé de la pièce de base (10).

7. Boîtier d'installation suivant l'une quelconque des revendications 1 à 6, **caractérisé en ce que** les parois latérales (43) du couvercle (40) sont pourvues de brides de fixation horizontales (43.2), **en ce que** la paroi de fond (41) et la paroi de plafond (48) sont également pourvues de brides de fixation horizontales (41.2), qui s'appliquent sur les brides de fixation (43.2) des parois latérales (43), et **en ce que** les brides de fixation (41.2, 43.2) sont dirigées vers l'espace intérieur du corps du boîtier et y sont vissées l'une à l'autre.

8. Boîtier d'installation suivant l'une quelconque des revendications 1 à 7, **caractérisé en ce que** le couvercle (40) possède au moins une serrure (44), qui coopère avec un élément de fermeture (12.1) de la pièce de base (10) ou du support (20) pour la fixation du couvercle (40) sur la pièce de base (10).

9. Boîtier d'installation suivant l'une quelconque des revendications 1 à 8, **caractérisé en ce que** la face avant du couvercle située à l'opposé de la pièce de base (10) peut être obturée avec une porte (50), qui est articulée par des charnières dans la région d'un côté du couvercle (40).
